# EUROPEAN PATENT SPECIFICATION

(11) **EP 3 259 471 B1**
(45) Date of publication and mention of the grant of the patent: **13.01.2021**
(21) Application number: 16717697.3
(22) Date of filing: 18.02.2016
(51) Int. Cl.: F03B 3/10, F03B 15/00

(54) **APPARATUS AND METHOD FOR RECOVERING ELECTRICITY IN A HYDRAULIC SYSTEM**
VORRICHTUNG UND VERFAHREN ZUR RÜCKGEWINNUNG VON ELEKTRIZITÄT IN EINEM HYDRAULIKSYSTEM
APPAREIL ET PROCÉDÉ DE RÉCUPÉRATION D'ÉLECTRICITÉ DANS UN SYSTÈME HYDRAULIQUE

(30) Priority: 18.02.2015 IT BS20150023
(43) Date of publication of application: 27.12.2017
(73) Proprietor: HP Energy S.r.l., 38121 Trento (IT)
(72) Inventor: FRUET, Nicola, 38121 Trento (IT)
(74) Representative: Brunacci, Marco
(86) International application number: PCT/IB2016/050879
(87) International publication number: WO 2016/132317

(56) References cited:
- JP-A- 2002 202 043
- JP-A- 2010 077 971
- US-A- 4 641 040
- US-A1- 2010 140 935

## Description

### Technical Field

The present invention relates to an apparatus and a production method of the recovery electricity in a hydraulic system, in particular exploiting the water geodetic (piezometric) heads available in aqueducts, sewers, irrigation systems, etc...

### Background Art

Often the hydraulic systems for the community, such as aqueducts, sewers and large irrigation systems, comprise tanks for water arranged at different heights and connected to each other, pipes, pumps, control systems, etc.; in practice between the tanks is a geodetic head, often less than 150 meters, which in the past was not exploited to produce electricity: the water flows by gravity from the higher tanks to the lower ones.

Recently, however, in order to minimize the costs incurred by the managers of these systems for the purchase of electricity from the grid, technical solutions have been proposed that envisage recovering a part of the potential energy of the water, i.e., which envisage the exploitation of the geodetic or piezometric heads, even if modest, generally corresponding precisely to 150 meters, for the production of electricity in *situ.*

The intent is not to make the hydraulic system independent, offsetting electricity consumption with self-production - a result which can be obtained in some cases when the geodetic head allows it - but to allow the production of electricity able to offset only a part of consumption.

The German company *KLEIN SCHANZLIN* & *BECKER AG,* known as KSB Aktiengesellschaft, for some years now, has presented electricity production apparatuses that exploit the geodetic heads available in the above-mentioned hydraulic systems. As mentioned in a press release of 2008, http://www.ksb.com/ksb-en/Press/Press-Archive/Press-Archive-2008/11158/turbine-systems-for-energy-generation.html, these apparatuses envisage operating the pumps normally present in hydraulic systems as turbines for pumping water from a tank at lower level to a tank at higher level. In point of fact, the basic idea is to connect an electric generator to the pumps, and when the water falls by gravity the pumps are made to rotate contrary to the direction of rotation required to pump water upwards, i.e., in such a way that the water enters the pump delivery and comes out of the suction. The expression commonly used by experts to identify pumps used as turbines is *'Pump as Turbine'* (PaT). The international patent application WO 86/03260 describes an example of a pump used as a turbine.

Each pump is characterized by corresponding operation curves, called *characteristic curves:* geodetic head H vs. flow rate Q, power P vs. flow rate Q, efficiency η vs. flow rate Q, torque C vs. flow rate Q. The characteristic curves are detected by the manufacturer within a pump rotation speed interval typically ranging between 1200 and 3100 revolutions per minute (rpm), for the normal operation of the pump. Pump manufacturers do not provide the characteristic curves for the pump used as a turbine, because it is after all an operation not contemplated in the design phase. In practice, it is the designers of systems with PaT who detect the characteristic curves of the pumps so as to choose the one from time to time most suitable to work as a turbine in a given system.

The lower cost of a pump with respect to a turbine, the size being the same, is one of the reasons that make it preferable to use a PaT in place of a traditional turbine. The cost of a PaT may be more than 50% lower than the cost of a turbine of the same size. By contrast, the maximum efficiency of a PaT is certainly considerably lower than the maximum efficiency of a turbine of the same size, and is about 3% -8% less compared to the maximum efficiency of the machine used as a pump.

The PaTs can be inserted both along the large supply pipes that bring water from the springs to the urban centers, to cope with topographic gradients, and in hydraulic systems such as those described above, replacing the flow rate and pressure regulating/reduction valves. In the first case the head-flow rate pair is rather constant in time, because the flow which circulates in the external aqueducts is generally constant. In the second case, on the contrary, the variability of hydraulic conditions is ample; furthermore, because of the link between flow rate and pressure drop in the channels, the curve that describes the head available for energy recovery according to flow is decreasing monotone.

In practice, therefore, the adjustment of an electricity production apparatus based on the use of PaT - in particular when the PaT replaces the flow and pressure regulating/reduction valves in the hydraulic system - may not be at all easy.

It follows that the performance obtainable from known apparatuses are often not optimal.

It is instead desirable to have an apparatus and a method for recovering electricity that allow obtaining the highest possible performance in all operating conditions, with a simple adjustment.

Other apparatuses are known from US2010/140935 and JP2010077971.

### Description of the Invention

The object of the present invention is therefore to provide an apparatus for recovering electricity in hydraulic systems characterized by modest water geodetic heads, exploiting a PaT, which allows to always obtain the maximum possible production of electricity, even if operating conditions vary, e.g. if water flow varies.

Another object of the present invention is to provide a method to produce electricity with a PaT exploiting the water geodetic heads available in hydraulic systems such as aqueducts, sewers, irrigation systems, etc., allowing to obtain the best performance desired by the manager of the system and is simple to adjust in any operating condition.

Therefore, in a first aspect the present invention relates to an apparatus according to claim 1, for the production of electricity from gravitational potential energy of a mass of water, e.g. water in a hydraulic system such as an aqueduct.

In particular, the apparatus comprises at least a pump, e.g., centrifugal, radial, axial, single-stage, multi-stage, mixed flow, etc., adapted to operate as a turbine to exploit the geodetic head at the disposal of water. In practice the falling water is introduced into the pump at the relative delivery.

A current generator, AC or DC, synchronous or asynchronous, is driven by the pump preferably directly, or alternatively by means of a gearbox.

The generator is in turn equipped with an inverter, which can have variable frequency if the generator is alternating current, or fixed frequency if the generator is direct current. The inverter can work in two configurations, passing instantly from one to another and vice versa, according to the operating conditions in which it operates at a given instant.

In a first configuration, called *drive,* the inverter can intervene in the adjustment of the rotation speed of the current generator and, therefore, of the pump connected to it, acting as a motor and accelerating the pump-electric generator system. In this configuration the inverter draws current from the grid to which the generator is connected.

In a second configuration, called *regenerative,* the inverter can intervene in the adjustment of the rotation speed of the current generator and, therefore, of the pump connected to it, acting as a magnetic brake; the inverter prevents the pump-current generator system from exceeding a threshold value of the rotation speed and, as explained below, this value is in turn established according to the needs of the apparatus' manager.

During operation, as soon as the torque supplied by the water to the pump exceeds the threshold value set to maintain the rotation speed set for the *drive* configuration, e.g., 3000 revolutions per minute, the inverter automatically switches to the *regenerative* configuration to recover electric power.

The apparatus also comprises a sensor for the number of revolutions of the electric generator and/or the number of revolutions of the pump.

Optionally, and as a precaution, the apparatus also has a pressure sensor set to detect the pressure difference (differential) of the water at input and output of the PaT pump. Preferably, but not necessarily, the apparatus also comprises at least one flow rate sensor designed to detect the water flow rate values supplied to the pump delivery. This sensor is not necessary if the hydraulic system with which the apparatus is associated operates with constant water flow rate, set up by the manager and thus known beforehand. Conversely, the flow rate sensor is required if the water flow rate varies over time.

As explained later, the sensors are logically connected to a control unit, which collects and processes the signals supplied by the sensors themselves.

Preferably, but not necessarily, the apparatus also comprises at least one regulating valve for regulating the water flow rate upstream of the pump. The valve, also connected to the control unit or manually operable by an operator, allows to make a fine adjustment of the water flow rate, to partially or completely shut off the flow of water.

As mentioned above, the apparatus comprises a control unit of the inverter and of the sensor for the number of revolutions and, if any, of the flow rate sensor, of the pressure sensor and of the regulating valve. The control unit is preferably of the electronic type and has program means comprising a memory in which are loaded the characteristic curves of the pump used as a turbine.

As has been said, the characteristic curves are detected from time to time by the designer and loaded in the memory of the control unit which uses them to operate all the apparatus components in the most appropriate way.

According to the present invention the control unit is programmed to control the apparatus and to obtain:
a) maximum production of electricity in all operating conditions, by adjusting the rotation speed of the pump through the inverter, in feedback based on the number of revolutions detected by the specific sensor.

Thanks to the presence of the inverter and the sensor for the number of revolutions, the apparatus is able to optimize the function a) in any operating condition. By contrast, conventional apparatuses do not allow so much versatility and are much more difficult to adjust and less versatile.

More in detail, the maximum production of electricity referred to at point a) is obtained in one of the following ways:
a1) the water flow rate is substantially constant and known beforehand and we proceed by sampling the number of revolutions of the pump or of the electric generator, by means of the corresponding sensor, comparing such sampled values with the characteristic curves loaded into the memory and operating the inverter to adjust the rotation speed of the electric generator and, therefore, the rotation speed of the pump connected to it, and keep it stable at the number of revolutions corresponding to the maximum production of electricity,
   or,
a2) the flow rate and/or pressure of water vary, the apparatus comprises the flow rate sensor and/or the pressure sensor, and we proceed by sampling, by means of such sensors, the flow rate values and/or the pressure values of the water supplied by the pump, comparing such sampled values with the characteristic curves loaded in the memory and operating the inverter to adjust the rotation speed of the electric generator and, therefore, the rotation speed of the pump connected to it, and keep it stable at the number of revolutions corresponding to the maximum production of electricity for the flow rate and/or pressure values detected.

During the steps a1) and a2) it is the inverter which regulates the number of revolutions of the pump PaT. If the water flow rate regulating valve is present, it is also possible to obtain a fine adjustment of the number of revolutions, and/or of the flow rate, by operating the water flow rate regulating valve upstream of the pump.

The sampling of the number of revolutions of the pump or of the electric generator also corresponds in practice to the sampling of the torque, considering that to a certain number of revolutions corresponds a univocal torque value of the electric generator or of the pump PaT, according to the characteristic curves.

The frequency of sampling is chosen using the Nyquist theorem based on the frequency whereby the water flow rate changes in the hydraulic system. This is not a particularly relevant figure considering that in the above-described hydraulic systems the water flow rate is kept approximately constant by the manager.

As already mentioned, optionally the apparatus also has the flow rate sensor and the control unit is also programmed to obtain, in addition to the adjustment referred to in step a):
b) a certain flow rate of water flowing through the pump.

Such adjustment is implemented in feedback according to the number of revolutions of the pump or of the electric generator, if the water flow rate is constant and known beforehand, or, if the water flow rate is variable or in any case not known beforehand, according to the flow rate value measured by the flow rate sensor, and is obtained by means of one of:
b1) adjusting the inverter by means of the control unit, to bring the current generator and, therefore, the pump connected to it to the desired number of revolutions, so that, through the pump which rotates at the desired number of revolutions, only the desired water flow rate can pass;
b2) if the water flow rate regulating valve is present upstream of the pump: adjusting by means of the control unit of such valve;
b3) if the water flow rate regulating valve is present: adjusting both the regulating valve and the inverter by means of the control unit, i.e., by making a mixed adjustment of b1) and b2).

If the apparatus also has the pressure sensor, the control unit can also be programmed to obtain the following adjustment in the hydraulic system, in addition to the adjustment referred to in step a) and in addition or as an alternative to the adjustment in step b):
c) a certain water pressure at the pump outlet.

The adjustment referred to at point c) is carried out in feedback according to the pressure value measured by the pressure sensor, and is obtained by means of one of: c1
) adjusting the inverter by means of the control unit, to bring the current generator and, therefore, the pump connected to it to the desired number of revolutions, so that, through the pump which rotates at the desired number of revolutions, only the desired water flow rate can pass, corresponding to the desired pressure according to the characteristic curves loaded in the memory of the control unit;
c2) if the water flow rate regulating valve is present: by regulating such valve by means of the control unit, so that the set water flow rate corresponds to the desired pressure according to the characteristic curves of the pump;
c3) by adjusting both the regulating valve and the inverter by means of the control unit, i.e., by making a mixed adjustment of c1) and c2).

Advantageously, therefore, the apparatus always allows obtaining the best adjustment according to the manager's needs.

Another adjustment option provided by the apparatus of the present invention relates to the water level in the tank or basin that supplies the pump used as a turbine. Preferably the apparatus comprises a level sensor, designed to measure the water level in the tank and the control unit is programmed to implement any one of the adjustments b1), b2) or b3) in feedback according to the value detected by the level sensor, to keep the water level in the tank constant over time. This function is particularly useful when the hydraulic system manager needs to preserve the supply of water in a basin.

In a second aspect, the present invention relates to a method according to any of claims 8-14 for producing electricity in a hydraulic system, in a simple and effective way under any operating conditions.

### Brief Description of the Drawings

Further characteristics and advantages of the invention will become better apparent from the examination of the following detailed description of a preferred, but not exclusive embodiment, illustrated only by way of non-limiting example, with the support of the attached drawings, in which:
- Figure 1 is a schematic view of a hydraulic system wherein an apparatus is installed according to the present invention;
- Figure 2 is a conceptual and schematic view of an apparatus according to the present invention;
- Figures 3 to 13 are flow charts explaining the operation of the apparatus according to the present invention;
- Figure 14 is a flow rate/power graph of an apparatus according to the present invention;
- Figure 15 is a flow rate/geodetic head graph of an apparatus according to the present invention.

### Embodiments of the Invention

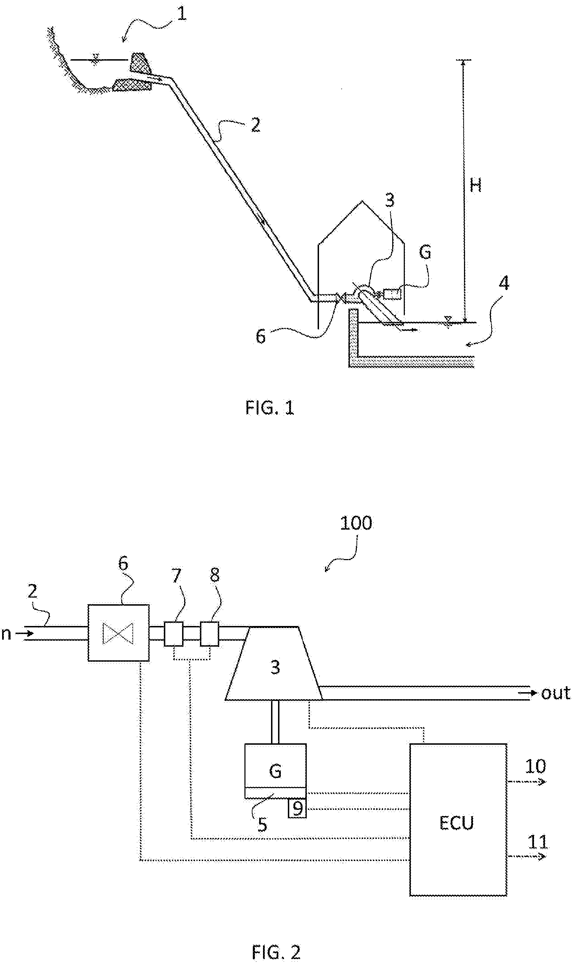

With reference to figure 1, a hydraulic system of small size, e.g., an aqueduct, comprises a water storage basin 1. A water pipeline 2 conveys the water from the basin 1 to a pump 3 used as a turbine, i.e., supplied with water at the delivery thereof. To the pump 3 an electric generator G is coupled, in turn connected to an external power grid or to an internal network of the system, called island. The water swirled in the pump 3 is discharged into a second basin 4.

The electric generator G is coupled to the pump 3 directly or through a gearbox.

The geodetic head at the disposal of water is indicated by the letter H.

With reference to figure 2, an apparatus 100 according to the present invention comprises a pump 3 used as a turbine, i.e., a PaT, arranged along the water pipeline 2 and connected to a generator G, asynchronous or synchronous, direct or alternating current, in turn having an inverter 5, with fixed or variable frequency, depending on whether the generator G is direct or alternating current respectively, by means of which the rotation speed of the generator G, and therefore of the pump 3 connected to its rotation shaft can be adjusted.

Optionally, as shown in the illustration, a valve 6 for regulating the water flow rate intercepts the pipeline 2 upstream of the pump 3. A pressure sensor 7 and a flow rate sensor 8, also optional, intercept the pipeline 2 upstream of the pump 3 to detect the pressure and the water flow rate respectively at inlet of the pump 3. For safety and maintenance reasons a bypass circuit can be mounted (not shown) with a valve system upstream of the pump 3, e.g., a manual or servo-assisted valve system, which allows the diversion of the water flow when the apparatus has to be stopped to perform maintenance, or in case of failure of the pump 3.

The operation of the valve 6 and of any bypass valve can be done manually, by means of the direct intervention of a human operator, but preferably occurs automatically as explained below.

A sensor 9 instantly detects the number of revolutions of the electric generator G and, therefore, the number of revolutions of the pump 3 that rotates with it.

A control unit ECU, preferably of the electronic program type, is logically connected to the sensors 7 and 8 (if any), to the sensor 9, to the valve 6 (if any) and to the inverter 5, to check the operation thereof, and is connected to an external power grid through the connection 10 or to the island, e.g., an internal network of the hydraulic system which supplies the internal user points through the connection 11.

The control unit ECU knows the characteristic curves of the pump 3, which have been loaded in a memory.

The operation will now be described of the apparatus in relation to the state of the pump 3.

### Standby

The apparatus 100 is in standby and the pump 3 is ready to start and waiting for the start signal from the control unit. The start signal can be provided by an operator or may be subject to the occurrence of a condition of the hydraulic system or other components of the apparatus 100.

### Start

Having received the start signal, the control unit ECU releases any mechanical braking systems of the pump 3 or of the generator G, and commands the inverter 5 to push the alternator G and, therefore, the pump 3 in rotation up to the set speed, dependent on the power/pressure/flow rate curve of the pump 3 used as turbine PaT loaded in the memory. In this phase the inverter 5 operates as an electric motor that draws current from the external grid or from the island.

Once the desired rotational speed, e.g., 1500 rpm, is reached, the pump 3 is operated as turbine PaT, swirling the water falling along the pipeline 2, and kept stable in these conditions.

### Grid power input

Having checked that the pump 3 is operating stably, i.e., its operating parameters remain essentially stable over time, the electricity produced by the generator G can be introduced into the power grid or into the internal island of the hydraulic system. The control unit ECU is programmed to control the apparatus and to pursue a strategy between a), b) and possibly c) described above.

### Shutdown

During the shutdown process, the assembly formed by the pump 3 and by the generator G is gradually slowed down and then finally stopped in order not to damage any component. The impeller of the pump 3 is blocked and, if the bypass circuit is present, the water is diverted to bypass the pump 3. The slowdown is effected by the inverter 5 which can also operate as a magnetic brake, as described above.

### Emergency stop

In the event of the control unit ECU detecting an abnormal condition in the controlled components, it immediately interrupts the power input to the external grid or the island, and stops the pump-generator assembly as explained above or alternatively by means of instant braking (as in the case of lack of power supply to the apparatus). The control unit ECU has preferably a buffer battery in order to operate even when there is no external power supply. The control unit ECU generates an alarm signal. If necessary to ensure the water supply, e.g., in an aqueduct, the control unit ECU sets the bypass of the pump 3 to continue the flow of water. Even when the impeller of pump 3 is blocked, the pump 3 allows the flow of most of the water: the flow rate through the stopped pump 3 depends on the pump model and can generally be greater or lesser compared to the flow rate with rotating pump.

### Data control

At the same time during the procedures described above, the control unit ECU continues to process the signals coming from the sensors 7 (if any) and 8-9 to make sure the pump 3 is working properly as required by the system manager and that there are no faults.

The operation will now be described of the apparatus 100 in relation to the maximum performance desired by the manager.

### A) Maximum electricity production

When the manager of the apparatus 100 wishes to obtain the maximum production of electricity from the generator G, this is achieved in two ways by the control unit ECU.

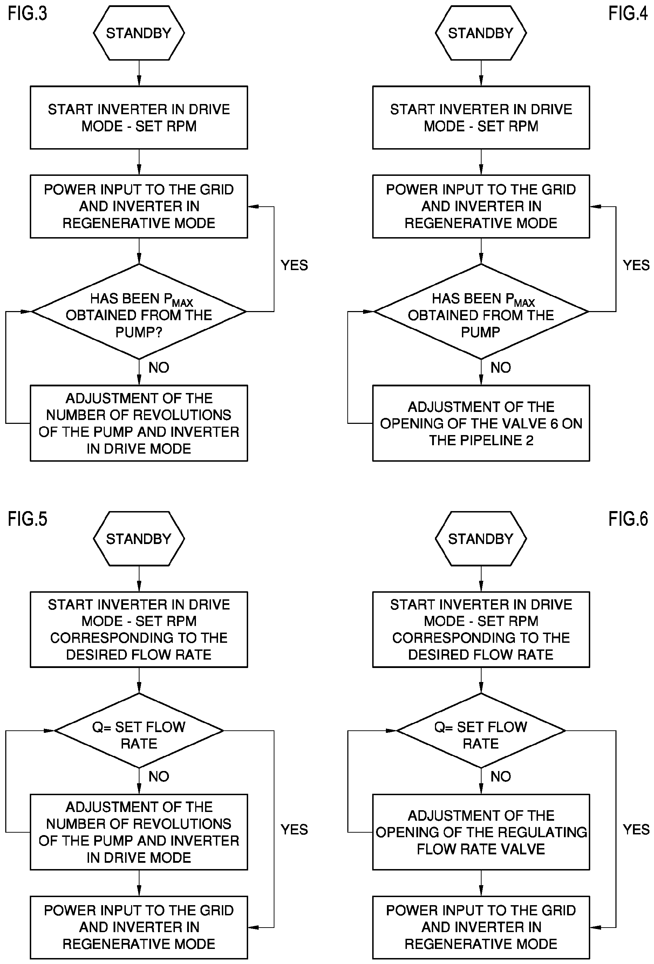

Figure 3 is a flow chart relating to a first mode *a1).* From a standby situation, the control unit ECU commands the inverter 5 to drive the electric generator G in rotation until the number of revolutions are reached corresponding to the maximum production of electricity (set rpm); this datum is supplied by the manufacturer of the generator G and in any case univocally corresponds to a power value in the characteristic curves of the pump 3 used as turbine PaT stored in the control unit ECU. The inverter 5 draws current to function as the motor of the generator G.

The water is made to swirl in the pump 3. If the water flow rate regulating valve 6 is fitted, this can be used to obtain a fine adjustment of the number of revolutions of the pump 3. Once the number of revolutions has been reached for the maximum production of electricity, the generator G produces electricity and the control unit ECU provides for its input into the grid or distribution to the island inside the hydraulic system, at the same time placing the inverter in the *regenerative* mode.

The control unit ECU constantly checks (with a certain sampling frequency) by means of the sensor 9 for the number of revolutions if the maximum power of the pump 3 has been achieved. If this is the case, it continues to inject electricity into the grid, as just described, otherwise it makes a new adjustment of the number of revolutions of the pump 3 by means of the inverter 5 in the *drive* mode.

In practice the control unit ECU makes a fine adjustment of the rotation speed of the pump 3, by means of the inverter 5, in feedback on the basis of the signal generated by the sensor 9.

Figure 4 is a flow chart relating to a further adjusting mode that, in addition to what has been said in *a1),* provides that the control unit ECU also acts on the regulating valve 6 of the water flow rate to obtain a fine adjustment of the number of revolutions, and/or of the flow rate.

### B) Optional: adjustment of the water flow rate flowing through the pump

When the manager of the apparatus 100 wishes to obtain a given flow rate of water in the pipeline 2, e.g., because the downstream basin 4 cannot receive a flow rate higher than a nominal flow rate, or because the gradual emptying or filling of one of the basins 1 or 4 is to be obtained, this is achieved in three ways by the control unit ECU. Adjustment b) can be obtained in addition to adjustment a), i.e., the manager can set the flow rate and the apparatus 100 adjusts itself to obtain the maximum production of electricity at such flow rate.

Figure 5 is a flow chart relating to a first mode *b1).* From a standby situation, the control unit ECU commands the inverter 5 to drive the electric generator G in rotation until the number of revolutions (set rpm) are reached corresponding to the desired water flow rate through the pump 3; the control unit ECU takes this datum from the stored characteristic curves of the pump 3 used as a turbine PaT. The inverter 5 draws current to function as the motor of the generator G.

The adjustment of the number of revolutions is performed continuously by the control unit ECU by means of the inverter 5 in feedback on the basis of the value of the water flow rate detected by the sensor 8. When the water flow rate corresponds to the desired value, the control unit ECU commands the input of electrical current into the grid and the inverter 5 switches to the *regenerative* mode.

Figure 6 is a flow chart relating to a second mode *b2)* which differs from mode *b1)* because the fine adjustment of the water flow rate flowing through the pump 3 is performed not only by acting on the inverter 5, but also by acting on the valve 6, if any, for the adjustment of the water flow rate in the pipeline 2. The adjustment is always in feedback by the control unit ECU.

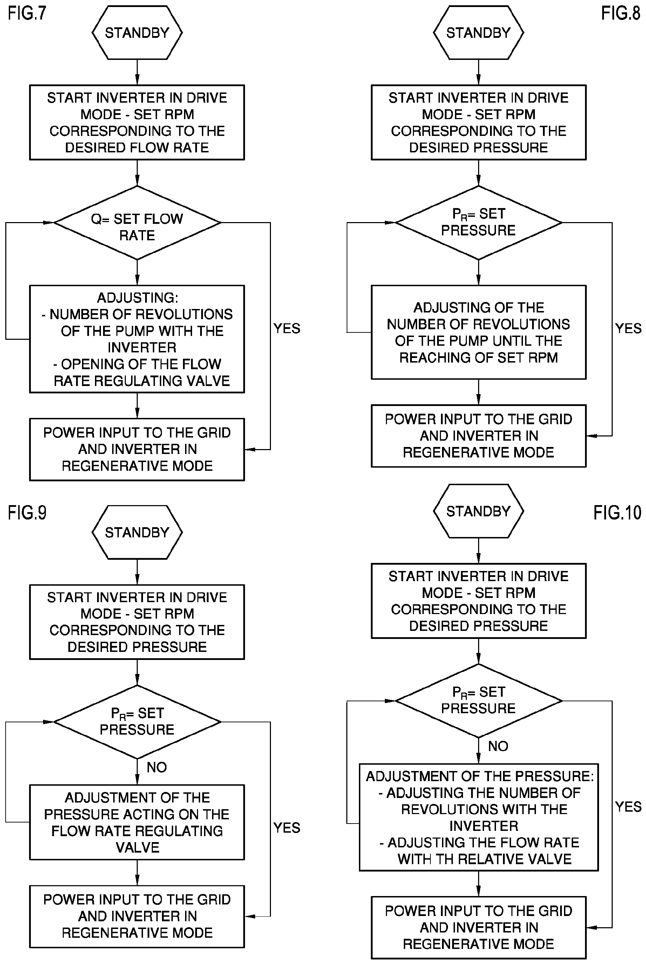

Figure 7 is a flow chart relating to a third mode *b3)* which corresponds to a mixed adjustment between the modes *b1)* and *b2),* i.e. the control unit ECU adjusts both the number of revolutions of the pump 3 and the degree of opening of the flow rate regulating valve 6.

### C) Optional: adjustment of the pressure of water flowing through the pump

When the manager of the apparatus 100 wishes to obtain a given water pressure in the pipeline 2, this is optionally achieved in three ways by the control unit ECU connected by a pressure sensor 7, absolute or differential, able to detect the difference in pressure upstream and downstream of the pump 3. Adjustment c) is obtainable in addition to adjustment a), and alternatively or in addition to adjustment b), i.e., the manager can set the pressure and the apparatus 100 is adjusted to obtain the maximum production of electricity at such pressure.

Figure 8 is a flow chart relating to a first mode *c1).* From a standby situation, the control unit ECU commands the inverter 5 to drive the electric generator G in rotation until the number of revolutions (set rpm) are reached corresponding to the desired pressure through the pump 3; the control unit ECU takes this datum from the stored characteristic curves of the pump 3 used as a turbine PaT. The inverter 5 draws current to function as the motor of the generator G.

The adjustment of the number of revolutions is performed continuously by the control unit ECU by means of the inverter 5 in feedback on the basis of the pressure value detected by sensor 7. When the water pressure corresponds to the desired value, the control unit ECU commands the input of electricity into the grid and the inverter 5 switches to the *regenerative* mode.

Figure 9 is a flow chart relating to a second mode *c*2) which differs from mode *c1)* because the adjustment of the pressure of the water flowing through the pump 3 is not performed by acting on the inverter 5, and therefore on the number of revolutions, but by acting on the valve 6, if any, for the adjustment of water flow rate in the pipeline 2. The adjustment is always in feedback by the control unit ECU.

Figure 10 is a flow chart relating to a third mode *c3)* which corresponds to a mixed adjustment between the modes *c1)* and *c2),* i.e. the control unit ECU adjusts both the number of revolutions of the pump 3 and the degree of opening of the flow rate regulating valve 6.

### Adjustment of water level in the upstream basin

When the manager of the apparatus 100 wishes to maintain a determinate water level in the basin 1, this is achieved in three ways by the control unit ECU.

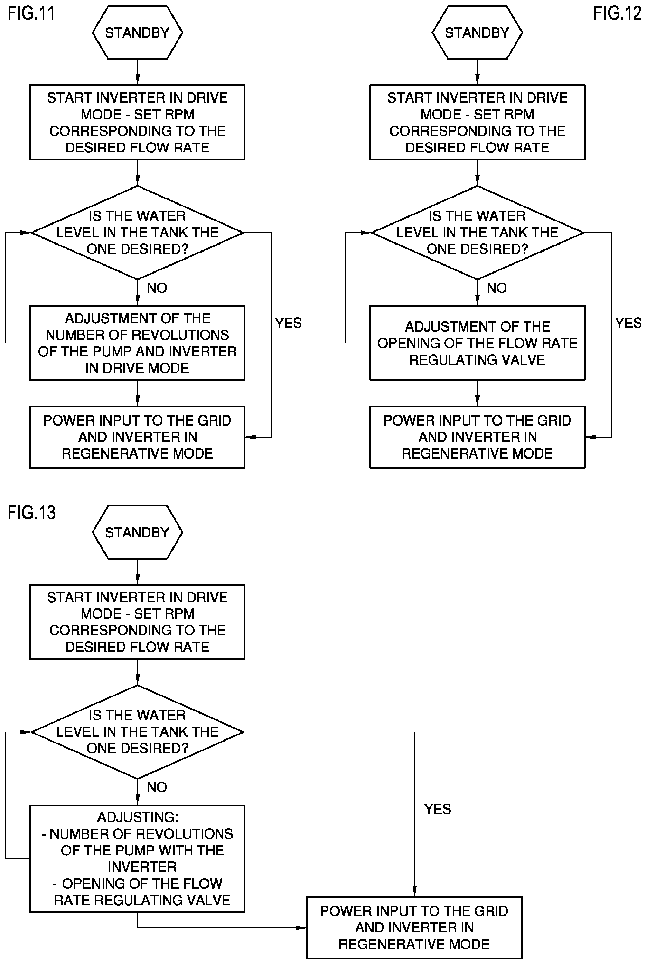

Figures 11-13 are flow charts explaining how to get this result. In practice, the charts of Figures 11-13 correspond to the charts of Figures 5-7, respectively; the only difference consists in the fact that the feedback is based on the value of the water level in basin 1 detected by a suitable sensor connected to the control unit ECU:

### Practical example

A hydraulic system is assumed with maximum flow rate of 14 l/s along the pipeline 2 and geodetic head H of 100 m.

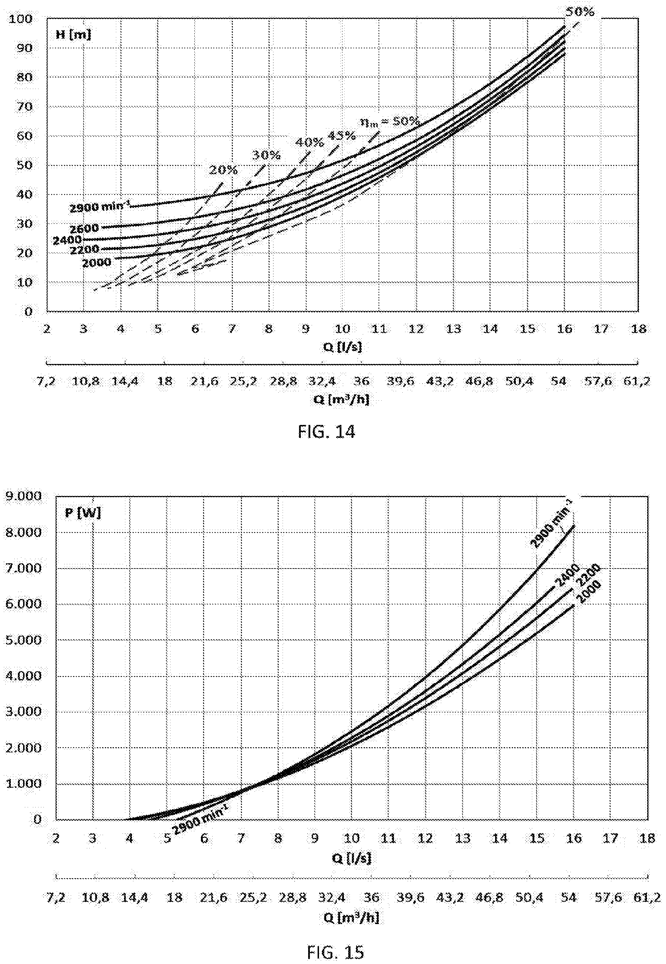

Figure 14 is a graph of some characteristic curves of the pump 3, with the water flow rate on the abscissa and power on the ordinate. From the curves in Figure 14 it can be seen that the maximum power obtainable from the generator G at 2900 rpm is about 5.9 kW.

The curves are all loaded into the memory of the control unit ECU, which uses them continually to calculate the best operating parameters according to the performance to be optimized selected by the manager.

It is assumed that, for reasons of water availability - e.g., due to the lack of water caused by a period of drought, or merely less demand by users - the available flow rate is reduced to 6.5 l/s. In this case to obtain maximum power the control unit ECU will have to reduce the rotation speed to 2200 rpm.

Figure 15 is a graph of some characteristic curves of pump 3, with the water flow rate on the abscissa and the geodetic head on the ordinate. From the curves of figure 15 it can be seen that the head H used by the pump 3 at 6.5 l/s at 2200 rpm is approximately 26 m. In this new configuration the pump 3 delivers about 640 W, which corresponds to maximum power output in the range of 1200 to 2900 rpm. At this point the flow rate curves intersect, and it is preferable to adjust the apparatus 100 so that the pump 3 maintains the minimum rotation speed, production being equal.

## Claims

1. Apparatus (100) for the production of electricity from gravitational potential energy of a mass of water, e.g. water in a hydraulic system such as an aqueduct, comprising:
- at least a pump (3) adapted to operate as a turbine to exploit the geodetic head (H) at the disposal of water, i.e. supplied with water to the delivery of the pump (3),
- a current generator (G) driven by the pump (3),
- an inverter (5) operatively connected to the current generator (G),
- a sensor (9) for the number of revolutions of the electric generator and/or for the number of revolutions of the pump (3), and
- a control unit (ECU) of the inverter (5) and of the sensor (9) for the number of revolutions having program means comprising a memory in which are loaded the characteristic curves of the pump (3) used as a turbine,
- at least one regulating valve (6) of the water flow rate, supplied to the pump, also operated by the control unit (ECU)
- a level sensor, designed to measure the water level in a tank (1) upstream of the pump (3)
**characterized by** the fact that the control unit (ECU) is programmed to control the apparatus (100) and to:
a) obtain the maximum production of electricity,
b) obtain a certain flow rate of water flowing through the pump,
c) adjust the water pressure downstream of the pump
d) keep the water level in said tank (1) constant over time
by means of adjusting both the rotation speed of the pump (3) through the inverter (5) and the regulating valve (6), in feedback based on the value detected by the level sensor and the number of revolutions detected by the sensor (9).

2. Apparatus (100) according to claim 1, wherein the maximum production of electricity referred to in point a) is obtained:
*a1)* in conditions of constant water flow rate and known a priori, by sampling the number of revolutions detected by the special sensor (9), comparing such sampled values with the characteristic curves in the memory and operating the inverter (5) to adjust the rotation speed of the electric generator (G) and, therefore, the rotation speed of the pump (3), and keep it stable at the number of revolutions corresponding to the maximum production of electricity for the known flow rate value,
or
*a2)* in conditions of time-varying flow rate and/or pressure of water, or in any case unknowna a priori, where the apparatus (100) comprises at least one flow rate sensor (8) and/or one pressure sensor (7), we proceed by sampling, by means of such sensors (7, 8) the flow rate values and/or the pressure values of the water supplied by the pump (3), comparing such sampled values with the characteristic curves in memory and operating the inverter (5) to adjust the rotation speed of the electric generator (G) and, therefore, the rotation speed of the pump (3) connected to it, and keep it stable at the number of revolutions corresponding to the maximum production of electricity for the detected flow rate and/or pressure values.

3. Apparatus (100) according to claim 1 or claim 2, wherein the at at least one regulating valve (6) of the water flow rate, supplied to the pump (3), also operated by the control unit (ECU) is able to obtain the fine adjustment of the number of revolutions of the pump (3) and/or of the water flow rate.

4. Apparatus (100) according to any of the preceding claims 1-3, wherein the control unit (ECU) is also programmed to obtain:
b) the certain flow rate of water flowing through the pump (3),
and such adjustment is obtained using the characteristic curves in memory, in feedback:
- based on the number of revolutions detected by the specific sensor (9), with water flow rate constant and known a priori, or
- based on the flow rate value measured by a flow rate sensor (8), with water flow rate variable over time or, in any case, not known a priori,
by means of one of:
*b1)* adjusting the inverter (5) by the control unit (ECU), to bring the current generator (G) and, therefore, the pump (3) connected to it to the desired number of revolutions, so that, through the pump (3) which rotates at the desired number of revolutions, only the desired water flow rate can pass;
or
*b2)* the apparatus comprises a regulating valve (6) of the water flow rate upstream of the pump (3) and we proceed by adjusting by the control unit (ECU) such valve with or without the intervention of the inverter (5) on the pump (3); or
b3) adjusting both the regulating valve (6) and the inverter (5), by the control unit (ECU), i.e., making a mixed adjustment between *b1)* and *b2).*

5. Apparatus (100) according to any of claims 1-4, wherein the control unit (ECU) is also programmed to control the apparatus (100) and also obtain:
c) adjusting the water pressure downstream of the pump (3),
and this adjustment is obtained using the characteristic curves in memory, in feedback:
- based on the number of revolutions detected by the specific sensor (9), with water flow rate and/or pressure constant and known a priori, or
- based on the pressure value measured by the pressure sensor (7), with water flow rate and/or pressure variable over time or, in any case, not known a priori, by means of one of:
*c1)* adjusting the inverter (5) by the control unit (ECU), to bring the current generator (G) and, therefore, the pump (3) connected to it, to the desired number of revolutions, so that, through the pump (3) which rotates at the desired number of revolutions, only the desired water flow rate can pass, corresponding to the desired pressure;
or, the apparatus (100) also comprises a pressure sensor (7) designed to detect the difference in pressure of the water upstream and downstream of the pump (3), and at least one regulating valve (6) of the water flow rate, and the adjustment of water pressure downstream of the pump (3) is obtained alternatively:
c2) adjusting, by the control unit (ECU), the regulating valve (6) of the water flow rate upstream of the pump (3), so that the water flow rate set corresponds to the desired pressure as measured by the pressure sensor (7);
c3) adjusting both the regulating valve (6) and the inverter (5), by the control unit (ECU), i.e., making a mixed adjustment between *c1)* and *c2).*

6. Apparatus (100) according to any of claims 1-5 wherein:
- in a first configuration, called *drive,* the inverter (5) intervenes in the adjustment of the rotation speed of the current generator (G) and, therefore, of the pump (3) connected to it, acting as a motor and accelerating the pump-electric generator system, drawing current e.g. from the grid, and
- in a second configuration, called *regenerative,* the inverter (5) intervenes in the adjustment of the rotation speed of the current generator (G) and, therefore, of the pump (3) connected to it, acting as a magnetic brake, thus preventing the pump-current generator (G) system from exceeding a threshold value of the rotation speed, and
- during its operation, the inverter (5) automatically switches from one configuration to the other based on the actual needs.

7. A method for the production of electricity exploiting a geodetic head (H) of water in a hydraulic system, comprising the steps of:
- installing at least one pump (3) operable as a turbine PaT to exploit the geodetic head (H) available to water in a tank (1) supplying water to the delivery of the pump (3),
- coupling to the pump (3) a current generator (G) having an inverter (5) with variable or fixed frequency depending on the generator (G) being alternating or direct current,
- providing a t least one regulating valve (6) of the water flow rate supplied to the pump
- installing a level sensor, designed to measure the water level in said tank (1)
- installing at least one sensor (9) for the number of revolutions of the generator or of the number of revolutions of the pump (3), and
- providing a control unit (ECU) of the inverter (5) and of the regulating valve (6) connected to the level sensor and to the sensor (9) for the number of revolutions, having program means comprising a memory in which are loaded the characteristic curves of the pump (3) used as a turbine PaT
**characterized by** the fact that the control unit (ECU) is programmed to control the apparatus (100) and to:
a) obtain the maximum production of electricity,
b) obtain a certain flow rate of the water flowing through the pump,
c) adjust the water pressure downstream of the pump,
d) keep the water level in the tank constant over time,
by means of adjusting both the regulating valve (6) and the rotation speed of the pump (3) through the inverter (5), in feedback based on the number of revolutions detected by the sensor (9) for the number of revolutions of the generator and on the water level in the tank detected by the level sensor.

8. Method according to claim 7, wherein the maximum production of electricity as per point a) is obtained:
*a1)* if the water flow rate is substantially constant and known a priori, by sampling the number of revolutions with the special sensor (9), comparing such sampled values with the characteristic curves in memory and operating the inverter (5) to adjust the rotation speed of the electric generator (G) and, therefore, the rotation speed of the pump (3), and keep it stable at the number of revolutions corresponding to the maximum production of electricity for the flow rate values detected,
or providing at least one flow rate sensor (8) and/or a pressure sensor (7), and
*a2)* if the flow rate and/or pressure of water vary over time or in any case unknown a priori by sampling, by means of such sensors (7, 8) the flow rate values and/or the pressure values of the water supplied by the pump (3), comparing such sampled values with the characteristic curves in memory and operating the inverter (5) to adjust the rotation speed of the electric generator (G) and, therefore, the rotation speed of the pump (3) connected to it, and keep it stable at the number of revolutions corresponding to the maximum production of electricity for the flow rate and/or pressure values detected.

9. Method according to claim 7 or claim 8, comprising the fact of providing at least one regulating valve (6) of the water flow rate, supplied by the pump (3), also operated by the control unit (ECU) to obtain the fine adjustment of the number of revolutions of the pump (3) and/or of the water flow rate.

10. Method according to any of claims 7-9, wherein the control unit (ECU) is also programmed to obtain:
b) the certain flow rate of water flowing through the pump (3),
and such adjustment is obtained using the characteristic curves in memory, in feedback:
- based on the number of revolutions detected by the specific sensor (9), with water flow rate constant and known a priori, or
- based on the flow rate value measured by a flow rate sensor (8), with water flow rate variable over time or, in any case, unknown a priori,
by means of one of:
*b1)* adjusting the inverter (5) by the control unit (ECU), to bring the current generator (G) and, therefore, the pump (3) connected to it, to the desired number of revolutions, so that, through the pump (3) which rotates at the desired number of revolutions, only the desired water flow rate can pass;
or
*b2)* the apparatus comprises a regulating valve (6) of the flow rate of water upstream of the pump (3) and we proceed by adjusting by the control unit (ECU) such valve with or without the intervention of the inverter (5) on the pump (3); or
*b3)* adjusting both the regulating valve (6) and the inverter (5), by the control unit (ECU), i.e., by making a mixed adjustment between *b1)* and *b2).*

11. Method according to any of claims 7-10, wherein the control unit (ECU) is also programmed to control the apparatus (100) and also obtain:
c) adjusting the water pressure downstream of the pump (3),
and this adjustment is obtained using the characteristic curves in memory, in feedback:
- based on the number of revolutions of the pump (3) or of the generator (G) detected by the specific sensor (9), with water flow rate and/or pressure constant and known a priori, or
- based on the pressure value measured by the pressure sensor (7), with water flow rate and/or pressure variable over time or, in any case, unknown a priori, by means of one of:
*c1)* adjusting the inverter (5) by the control unit (ECU), to bring the current generator (G) and, therefore, the pump (3) connected to it, to the desired number of revolutions, so that through the pump (3) which rotates at the desired number of revolutions, only the desired water flow rate can pass, corresponding to the desired pressure;
or, the apparatus (100) also comprises a pressure sensor (7) designed to detect the difference in pressure of the water upstream and downstream of the pump (3), and at least one regulating valve (6) of the water flow rate, and the adjustment of water pressure downstream of the pump (3) is obtained alternatively:
c2) adjusting, by the control unit (ECU), the regulating valve (6) of the water flow rate upstream of the pump (3), so that the flow rate set corresponds to the desired pressure as measured by the pressure sensor (7);
c3) adjusting both the regulating valve (6) and the inverter (5), by the control unit (ECU), i.e., making a mixed adjustment between *c1)* and *c2).*

12. Method according to any of claims 7-11, comprising the steps of:
d) the control unit (ECU) operates the inverter (5) alternatively in one of the two following configurations:
*d1)* in a first configuration, called *drive,* the inverter (5) drives the current generator (G) in rotation and, therefore, the pump (3) connected to it, acting as a motor and drawing electricity e.g. from an external grid, and
*d2)* in a second configuration, called *regenerative,* the inverter (5) brakes the current generator (G) and, therefore, the pump (3) connected to it, acting as a magnetic brake, thus preventing the pump-current generator system from exceeding a threshold value of the rotation speed, and
wherein during its operation, the inverter (5) automatically switches from one configuration to the other based on the actual needs.

13. Use of the apparatus (100) according to any of claims 1-6 to produce electricity by exploiting the geodetic head (H) of water in aqueducts, sewers, irrigation systems.

## Patentansprüche

1. Vorrichtung (100) zur Erzeugung von Elektrizität aus der potentiellen Gravitationsenergie einer Wassermasse, z.B. Wasser in einem hydraulischen System wie einem Aquädukt, umfassend:
- mindestens eine Pumpe (3), die ausgelegt ist als Turbine zu arbeiten, um die geodätische Fallhöhe (H) auszunutzen, die für Wasser zur Verfügung steht, das heißt die mit Wasser zur Förderung der Pumpe (3) versorgt wird,
- einen Stromgenerator (G), der durch die Pumpe (3) angetrieben wird,
- einen Wechselrichter (5), der operativ mit dem Stromgenerator (G) verbunden ist,
- einen Sensor (9) für die Drehzahl des Stromgenerators und/oder für die Drehzahl der Pumpe (3), und
- eine Steuereinheit (ECU) des Wechselrichters (5) und des Sensors (9) für die Drehzahl, die Programmmittel aufweist, die einen Speicher umfassen, in den die Kennlinien der als Turbine verwendeten Pumpe (3) geladen werden,
- mindestens ein Regelventil (6) für die Wasserdurchflussrate, die der Pumpe zugeführt wird, das ebenfalls von der Steuereinheit (ECU) betätigt wird,
- einen Niveausensor, der zur Messung des Wasserstandes in einem Tank (1) stromaufwärts der Pumpe (3) ausgelegt ist
**dadurch gekennzeichnet, dass** die Steuereinheit (ECU) programmiert ist, um die Vorrichtung (100) zu steuern und:
a) die maximale Produktion von Elektrizität zu erhalten,
b) eine bestimmte Durchflussrate des durch die Pumpe fließenden Wassers zu erhalten,
c) den Wasserdruck stromabwärts der Pumpe einzustellen,
d) den Wasserpegel in dem Tank (1) über die Zeit konstant zu halten, indem sowohl die Drehzahl der Pumpe (3) durch den Wechselrichter (5) als auch das Regelventil (6) in Rückkopplung basierend auf den von dem Niveausensor erfassten Werten und der von dem Sensor (9) erfassten Drehzahl eingestellt wird.

2. Vorrichtung (100) nach Anspruch 1, bei dem die unter Buchstabe a) genannte maximale Produktion von Elektrizität erreicht wird:
a1) unter Bedingungen konstanter Wasserdurchflussrate und a priori bekannt, indem die von dem spezifisch Sensor (9) erfasste Drehzahl abgefragt wird, diese abgefragten Werte mit den Kennlinien im Speicher verglichen werden und der Wechselrichter (5) betrieben wird, um die Drehzahl des Stromgenerators (G) und damit die Drehzahl der Pumpe (3) einzustellen und bei der Drehzahl stabil zu halten, die der maximalen Stromerzeugung für den bekannten Wer der Durchflussrate entspricht,
oder
a2) unter Bedingungen zeitlich veränderlicher Durchflussrate und/oder Druck des Wassers oder jedenfalls a priori unbekannt, wobei die Vorrichtung (100) mindestens einen Durchflussratensensor (8) und/oder einen Drucksensor (7) umfasst, wir verfahren, in dem wir mittels dieser Sensoren (7, 8) die Werte der Durchflussrate und/oder des Drucks des von der Pumpe (3) gelieferten Wassers abfragen, diese abgefragten Werte werden mit den im Speicher befindlichen Kennlinien verglichen und der Wechselrichter (5) betrieben, um die Drehzahl des Stromgenerators (G) und damit die Drehzahl der mit ihm verbundenen Pumpe (3) einzustellen und stabil bei der Drehzahl zu halten, die der maximalen Stromproduktion für die erfassten Durchfluss- und/oder Druckwerte entspricht.

3. Vorrichtung (100) nach Anspruch 1 oder Anspruch 2, wobei das mindestens eine Regelventil (6) für die Wasserdurchflussrate, das der Pumpe (3) zugeführt wird und ebenfalls von der Steuereinheit (ECU) betätigt wird, in der Lage ist, eine Feineinstellung der Drehzahl der Pumpe (3) und/oder der Wasserdurchflussrate zu erhalten.

4. Vorrichtung (100) nach einem der vorstehenden Ansprüche 1-3, wobei die Steuereinheit (ECU) auch programmiert ist, dass sie erhält:
b) die bestimmte Durchflussrate des durch die Pumpe (3) fließenden Wassers, und eine solche Einstellung mit Hilfe der Kennlinien im Speicher in Rückkopplung erreicht wird:
- basierend auf der Drehzahl, die von dem spezifischen Sensor (9) erfasst werden, mit konstanter Wasserdurchflussrate und a priori bekannt, oder
- basierend auf dem von einem Durchflusssensor (8) gemessenen Wert der Durchflussrate, wobei die Wasserdurchflussrate über die Zeit variabel ist oder jedenfalls nicht a priori bekannt ist,
durch eines der folgenden Mittel:
b1) Einstellen des Wechselrichters (5) durch die Steuereinheit (ECU), um den Stromgenerator (G) und damit die daran angeschlossene Pumpe (3) auf die gewünschte Drehzahl zu bringen, so dass durch die Pumpe (3), die sich mit der gewünschten Drehzahl dreht, nur die gewünschte Wasserdurchflussrate passieren kann;
oder
b2) die Vorrichtung enthält ein Regelventil (6) für die Wasserdurchflussrate stromaufwärts der Pumpe (3) und wir verfahren, indem wir durch die Steuereinheit (ECU) ein solches Ventil mit oder ohne Eingriff des Wechselrichters (5) an der Pumpe (3) einstellen; oder
b3) Einstellen sowohl des Regelventils (6) als auch des Wechselrichters (5) durch die Steuereinheit (ECU), das heißt, Durchführen einer gemischten Einstellung zwischen b1) und b2).

5. Vorrichtung (100) nach einem der Ansprüche 1-4, wobei die Steuereinheit (ECU) auch programmiert ist, dass sie die Vorrichtung (100) steuert und auch erhält:
c) Einstellen des Wasserdrucks stromabwärts der Pumpe (3), wobei diese Einstellung unter Verwendung der Kennlinien im Speicher in Rückkopplung erhalten wird:
- basierend auf der Drehzahl, die von dem spezifischen Sensor (9) erfasst wird, wobei Wasserdurchflussrate und/oder Druck konstant und a priori bekannt sind, oder
- basierend auf dem Druckwert, gemessen vom Drucksensor (7), wobei die Wasserdurchflussrate und/oder der Druck über die Zeit oder jedenfalls nicht a priori bekannt sind, mittels eines der folgenden:
c1) Einstellen des Wechselrichters (5) durch die Steuereinheit (ECU), um den Stromgenerator (G) und damit die daran angeschlossene Pumpe (3) auf die gewünschte Drehzahl zu bringen, so dass durch die Pumpe (3), die sich mit der gewünschten Drehzahl dreht, nur die gewünschte Wasserdurchflussrate entsprechend dem gewünschten Druck passieren kann;
oder, die Vorrichtung (100) auch einen Drucksensor (7) umfasst, der dazu bestimmt ist, die Druckdifferenz des Wassers stromaufwärts und stromabwärts der Pumpe (3) zu erfassen, und mindestens ein Regelventil (6) für die Wasserdurchflussrate, und die Einstellung des Wasserdrucks stromabwärts der Pumpe (3) alternativ erhalten wird:
c2) Einstellen des Regelventils (6) der Wasserdurchflussrate vor der Pumpe (3) durch die Steuereinheit (ECU), so dass die eingestellte Wasserdurchflussrate dem gewünschten Druck entspricht, der vom Drucksensor (7) gemessenen wurde;
c3) Einstellen sowohl des Regelventils (6) als auch des Wechselrichters (5) durch die Steuereinheit (ECU), das heißt Durchführen einer gemischten Einstellung zwischen c1) und c2).

6. Vorrichtung (100) nach einem der Ansprüche 1-5, wobei:
- in einer ersten Konfiguration, genannt Antrieb, der Wechselrichter (5) in die Einstellung der Drehzahl des Stromgenerators (G) und damit in die mit ihm verbundenen Pumpe (3) eingreift, indem er als Motor wirkt und das System Pumpe-Stromgenerator beschleunigt, indem er Strom zum Beispiel aus dem Netz entnimmt, und
- in einer zweiten Konfiguration, genannt regenerativ, der Wechselrichter (5) in die Einstellung der Drehzahl des Stromgenerators (G) und damit in die mit ihm verbundenen Pumpe (3) eingreift und als magnetische Bremse wirkt, wodurch verhindert wird, dass das System Pumpen-Stromgenerator (G) einen Schwellenwert der Drehzahl überschreitet, und
- während des Betriebs der Wechselrichter (5) automatisch von einer Konfiguration in die andere schaltet, basierend auf dem tatsächlichen Bedarf.

7. Verfahren zur Erzeugung von Elektrizität unter Ausnutzung einer geodätischen Fallhöhe (H) von Wasser in einem hydraulischen System, umfassend die Schritte:
- Installieren von mindestens einer Pumpe (3), die als Turbine PaT betrieben werden kann, um die geodätische Fallhöhe (H) auszunutzen, die dem Wasser in einem Tank (1) zur Verfügung steht, der Wasser zur Förderung der Pumpe (3) liefert,
- Verbinden eines Stromgenerators (G) mit der Pumpe (3), wobei der Stromgenerator (G) einen Wechselrichter (5) mit variabler oder fester Frequenz aufweist, abhängig davon, ob der Generator (G) Wechselstrom oder Gleichstrom ist,
- Bereitstellen mindestens eines Regelventils (6) für die der Pumpe zugeführte Wasserdurchflussrate
- Installieren eines Niveausensors, der zur Messung des Wasserstandes im Tank (1) ausgelegt ist
- Installieren von mindestens einem Sensor (9) für die Drehzahl des Generators oder die Drehzahl der Pumpe (3), und
- Bereitstellen einer Steuereinheit (ECU) des Wechselrichters (5) und des Regelventils (6), das mit dem Niveausensor und mit dem Sensor (9) für die Drehzahl verbunden ist, welches Programmmittel aufweist, die einen Speicher umfassen, in den die Kennlinien der als Turbine PaT verwendeten Pumpe (3) geladen werden,
**dadurch gekennzeichnet, dass** die Steuereinheit (ECU) programmiert ist, um die Vorrichtung (100) zu steuern und:
a) die maximale Produktion von Elektrizität zu erhalten,
b) eine bestimmte Durchflussrate des durch die Pumpe fließenden Wassers zu erhalten,
c) den Wasserdruck stromabwärts der Pumpe einzustellen,
d) den Wasserpegel in dem Tank über die Zeit konstant zu halten, indem sowohl Regelventil (6) als auch die Drehzahl der Pumpe (3) über den Wechselrichter (5) in Rückkopplung auf der Grundlage der vom Sensor (9) für die Drehzahl des Generators ermittelten Drehzahl und des vom Niveausensor ermittelten Wasserstandes im Tank eingestellt werden.

8. Verfahren nach Anspruch: 7, wobei die maximale Produktion von Elektrizität gemäß Punkt a) erhalten wird:
a1) falls die Wasserdurchflussrate im Wesentlichen konstant und a priori bekannt ist, durch Abfragen der Drehzahl mit dem Spezialsensor (9), Vergleichen dieser abgefragten Werte mit den Kennlinien im Speicher und Betreiben des Wechselrichters (5), um die Drehzahl des Stromgenerators (G) und damit die Drehzahl der Pumpe (3) einzustellen und bei der Drehzahl stabil zu halten, die der maximalen Produktion von Elektrizität für die erfassten Durchflussratenwerte entspricht,
oder Bereitstellen mindestens eines Durchflussratensensors (8) und/oder eines Drucksensors (7), und
a2) falls sich die Durchflussrate und/oder der Druck des Wassers im Laufe der Zeit ändern oder jedenfalls a priori durch Abfragen unbekannt ist, mittels solcher Sensoren (7, 8) die Werte der Durchflussrate und/oder die Druckwerte des von der Pumpe (3) gelieferten Wassers, Vergleichen dieser abgefragten Werte mit den Kennlinien im Speicher und Betreiben des Wechselrichters (5), um die Drehzahl des Stromgenerators (G) und somit die Drehzahl der mit ihm verbundenen Pumpe (3) einzustellen und bei der Drehzahl stabil zu halten, die der maximalen Produktion von Elektrizität für die erfassten Werte der Durchflussrate und/oder des Drucks entspricht.

9. Verfahren nach Anspruch 7 oder 8, umfassend die Tatsache, dass mindestens ein Regelventil (6) für die Wasserdurchflussrate vorgesehen ist, das von der Pumpe (3) gespeist und ebenfalls von der Steuereinheit (ECU) betätigt wird, um eine Feineinstellung der Drehzahl der Pumpe (3) und/oder der Wasserdurchflussrate zu erhalten.

10. Verfahren nach einem der Ansprüche 7-9, bei dem auch die Steuereinheit (ECU) programmiert wird, dass sie erhält:
b) die bestimmte Durchflussrate des durch die Pumpe (3) fließenden Wassers, und eine solche Einstellung erhalten wird unter Verwendung der gespeicherten Kennlinien in Rückkopplung:
- basierend auf der Drehzahl, die von dem spezifischen Sensor (9) erfasst wird, mit konstanter Wasserdurchflussrate und a priori bekannt, oder
- basierend auf dem von einem Durchflussratensensor (8) gemessenen Wert der Durchflussrate, wobei die Wasserdurchflussrate über die Zeit variabel oder jedenfalls a priori unbekannt ist, mittels einer der folgenden Methoden:
b1) Einstellen des Wechselrichters (5) durch die Steuereinheit (ECU), um den Stromgenerator (G) und damit die daran angeschlossene Pumpe (3) auf die gewünschte Drehzahl zu bringen, so dass durch die Pumpe (3), die sich mit der gewünschten Drehzahl dreht, nur die gewünschte Wasserdurchflussrate passieren kann;
oder
b2) die Vorrichtung ein Regelventil (6) für die Wasserdurchflussrate stromaufwärts der Pumpe (3) umfasst und wir verfahren, indem wir durch die Steuereinheit (ECU) ein solches Ventil mit oder ohne Eingriff des Wechselrichters (5) an der Pumpe (3) einstellen; oder
b3) Einstellen sowohl des Regelventils (6) als auch des Wechselrichters (5) durch die Steuereinheit (ECU), das heißt Durchführen einer gemischten Einstellung zwischen b1) und b2).

11. Verfahren nach einem der Ansprüche 7-10, wobei die Steuereinheit (ECU) auch so programmiert wird, dass sie das Gerät (100) steuert und auch erhält:
c) Einstellen des Wasserdrucks stromabwärts der Pumpe (3), wobei diese Einstellung unter Verwendung der gespeicherten Kennlinien in Rückkopplung erfolgt:
- basierend auf der Drehzahl der Pumpe (3) oder des Generators (G), die von dem spezifischen Sensor (9) erfasst werden, wobei die Wasserdurchflussrate und/oder der Druck konstant und a priori bekannt sind, oder
- auf der Grundlage des vom Drucksensor (7) gemessenen Druckwertes, wobei die Wasserdurchflussrate und/oder der Druck über die Zeit veränderlich oder jedenfalls a priori unbekannt sind, mittels einer der folgenden Methoden:
c1) Einstellen des Wechselrichters (5) durch die Steuereinheit (ECU), um den Stromgenerator (G) und damit die daran angeschlossene Pumpe (3) auf die gewünschte Drehzahl zu bringen, so dass durch die Pumpe (3), die sich mit der gewünschten Drehzahl dreht, nur die gewünschte Wasserdurchflussrate, die dem gewünschten Druck entspricht, fließen kann;
oder, die Vorrichtung (100) auch einen Drucksensor (7) umfasst, der dazu bestimmt ist, die Druckdifferenz des Wassers stromaufwärts und stromabwärts der Pumpe (3) zu erfassen, und mindestens ein Regelventil (6) für die Wasserdurchflussrate, und die Einstellung des Wasserdrucks stromabwärts der Pumpe (3) alternativ erhalten wird:
c2) Einstellen des Regelventils (6) der Wasserdurchflussrate stromaufwärts der Pumpe (3) durch die Steuereinheit (ECU), so dass die eingestellte Durchflussrate dem vom Drucksensor (7) gemessenen gewünschten Druck entspricht;
c3) Einstellung sowohl des Regelventils (6) als auch des Wechselrichters (5) durch die Steuereinheit (ECU), das heißt Durchführen einer gemischten Einstellung zwischen c1) und c2).

12. Verfahren gemäß einem der Ansprüche 7-11, umfassend die folgenden Schritte:
d) die Steuereinheit (ECU) betreibt den Wechselrichter (5) alternativ in einer der beiden folgenden Konfigurationen:
d1) in einer ersten Konfiguration, genannt Antrieb, treibt der Wechselrichter (5) den Stromgenerator (G) in Rotation und damit die daran angeschlossene Pumpe (3) an, die als Motor fungiert und Strom zum Beispiel aus einem externen Netz bezieht, und
d2) in einer zweiten Konfiguration, genannt regenerativ, bremst der Wechselrichter (5) den Stromgenerator (G) und damit die daran angeschlossene Pumpe (3), die als Magnetbremse wirkt und so verhindert, dass das System Pumpe-Stromgenerator einen Schwellenwert der Drehzahl überschreitet, und
wobei der Wechselrichter (5) während seines Betriebs automatisch von einer Konfiguration in die andere umschaltet, basierend auf dem tatsächlichen Bedarf.

13. Verwendung der Vorrichtung (100) nach einem der Ansprüche 1-6 zur Erzeugung von Elektrizität durch Ausnutzung der geodätischen Fallhöhe (H) in Aquädukten, Abwasserkanälen, Bewässerungssystemen.

## Revendications

1. Appareil (100) pour la production d'électricité à partir d'énergie potentielle gravitationnelle d'une masse d'eau, par exemple de l'eau dans un système hydraulique tel qu'un aqueduc, comprenant :
- au moins une pompe (3) adaptée pour fonctionner comme une turbine pour exploiter la hauteur de charge géodésique (H) lors de l'élimination d'eau, c'est-à-dire alimentée en eau jusqu'à la distribution de la pompe (3),
- un générateur de courant (G) entraîné par la pompe (3),
- un onduleur (5) fonctionnellement raccordé au générateur de courant (G),
- un capteur (9) pour le nombre de tours du générateur électrique et/ou pour le nombre de tours de la pompe (3), et
- une unité de commande (ECU) de l'onduleur (5) et du capteur (9) pour le nombre de tours ayant un moyen de programme comprenant une mémoire dans laquelle sont chargées les courbes de caractéristiques de la pompe (3) utilisée comme turbine,
- au moins un clapet de régulation (6) du débit d'eau, apporté à la pompe, également actionné par l'unité de commande (ECU),
- un capteur de niveau, conçu pour mesurer le niveau d'eau dans un réservoir (1) en amont de la pompe (3),
**caractérisé par le fait que** l'unité de commande (ECU) est programmée pour commander l'appareil (100) et pour :
a) obtenir la production d'électricité maximale,
b) obtenir un certain débit d'eau s'écoulant à travers la pompe,
c) ajuster la pression d'eau en aval de la pompe,
d) maintenir le niveau d'eau dans ledit réservoir (1) constant au fil du temps,
au moyen de l'ajustement de la vitesse de rotation de la pompe (3) par le biais de l'onduleur (5) et du clapet de régulation (6),
par rétroaction sur la base de la valeur détectée par le capteur de niveau et du nombre de tours détecté par le capteur (9).

2. Appareil (100) selon la revendication 1, dans lequel la production d'électricité maximale selon le point a) est obtenue :
*a1)* dans des conditions de débit d'eau constant et connu a priori, en échantillonnant le nombre de tours détecté par le capteur (9) spécial, en comparant de telles valeurs échantillonnées aux courbes de caractéristiques dans la mémoire et en faisant fonctionner l'onduleur (5) pour ajuster la vitesse de rotation du générateur électrique (G) et, par conséquent, la vitesse de rotation de la pompe (3), et la maintenir stable au nombre de tours correspondant à la production d'électricité maximale pour la valeur de débit connue,
ou
*a2)* dans des conditions de débit et/ou pression d'eau variant dans le temps, ou dans tous les cas inconnus a priori, où l'appareil (100) comprend au moins un capteur de débit (8) et/ou un capteur de pression (7), nous procédons en échantillonnant, au moyen de tels capteurs (7, 8), les valeurs de débit et/ou les valeurs de pression de l'eau apportée par la pompe (3), en comparant de telles valeurs échantillonnées aux courbes de caractéristiques en mémoire et en faisant fonctionner l'onduleur (5) pour ajuster la vitesse de rotation du générateur électrique (G) et, par conséquent, la vitesse de rotation de la pompe (3) raccordée à lui, et la maintenir stable au nombre de tours correspondant à la production d'électricité maximale pour les valeurs de débit et/ou de pression détectées.

3. Appareil (100) selon la revendication 1 ou la revendication 2, dans lequel l'au moins un clapet de régulation (6) du débit d'eau, apporté à la pompe (3), également actionné par l'unité de commande (ECU) est capable d'obtenir l'ajustement précis du nombre de tours de la pompe (3) et/ou du débit d'eau.

4. Appareil (100) selon l'une quelconque des revendications précédentes 1 à 3, dans lequel l'unité de commande (ECU) est également programmée pour obtenir :
b) le certain débit d'eau s'écoulant à travers la pompe (3),
et un tel ajustement est obtenu en utilisant les courbes de caractéristiques en mémoire, par rétroaction :
- sur la base du nombre de tours détecté par le capteur (9) spécifique, avec un débit d'eau constant et connu a priori, ou
- sur la base de la valeur de débit mesurée par un capteur de débit (8), avec un débit d'eau variable au fil du temps ou, dans tous les cas, inconnu a priori,
au moyen d'un parmi :
*bl)* l'ajustement de l'onduleur (5) par l'unité de commande (ECU), pour amener le générateur de courant (G) et, par conséquent, la pompe (3) raccordée à lui au nombre de tours souhaité, de telle sorte que, à travers la pompe (3) qui tourne au nombre de tours souhaité, seul le débit d'eau souhaité peut passer ;
ou
*b2)* l'appareil comprend un clapet de régulation (6) du débit d'eau en amont de la pompe (3) et nous procédons en ajustant par l'unité de commande (ECU) un tel clapet avec ou sans l'intervention de l'onduleur (5) sur la pompe (3) ; ou
b3) l'ajustement du clapet de régulation (6) et de l'onduleur (5), par l'unité de commande (ECU), c'est-à-dire en réalisant un ajustement mixte entre *bl)* et *b2).*

5. Appareil (100) selon l'une quelconque des revendications précédentes 1 à 4, dans lequel l'unité de commande (ECU) est également programmée pour commander l'appareil (100) et également obtenir :
c) l'ajustement de la pression d'eau en aval de la pompe (3),
et cet ajustement est obtenu en utilisant les courbes de caractéristiques en mémoire, par rétroaction :
- sur la base du nombre de tours détecté par le capteur (9) spécifique, avec un débit et/ou une pression d'eau constants et connus a priori, ou
- sur la base de la valeur de pression mesurée par un capteur de pression (7), avec un débit et/ou une pression d'eau variables au fil du temps ou, dans tous les cas, inconnus a priori,
au moyen d'un parmi :
c1) l'ajustement de l'onduleur (5) par l'unité de commande (ECU), pour amener le générateur de courant (G) et, par conséquent, la pompe (3) raccordée à lui, au nombre de tours souhaité, de telle sorte que, à travers la pompe (3) qui tourne au nombre de tours souhaité, seul le débit d'eau souhaité peut passer, correspondant à la pression souhaitée ;
ou, l'appareil (100) comprend également un capteur de pression (7) conçu pour détecter la différence de pression de l'eau en amont et en aval de la pompe (3), et au moins un clapet de régulation (6) du débit d'eau, et l'ajustement de pression d'eau en aval de la pompe (3) est obtenu en variante :
*c2)* en ajustant, par l'unité de commande (ECU), le clapet de régulation (6) du débit d'eau en amont de la pompe (3), de telle sorte que le débit d'eau réglé correspond à la pression souhaitée telle que mesurée par le capteur de pression (7) ;
*c3)* en ajustant à la fois le clapet de régulation (6) et l'onduleur (5), par l'unité de commande (ECU), c'est-à-dire en réalisant un ajustement mixte entre *c1)* et c2).

6. Appareil (100) selon l'une quelconque des revendications précédentes 1 à 5, dans lequel :
- dans une première configuration, appelée *entraînement,* l'onduleur (5) intervient dans l'ajustement de la vitesse de rotation du générateur de courant (G) et, par conséquent, de la pompe (3) raccordée à lui, servant de moteur et accélérant le système pompe-générateur électrique, attirant le courant par exemple en provenance du réseau, et
- dans une seconde configuration, appelée *régénérative,* l'onduleur (5) intervient dans l'ajustement de la vitesse de rotation du générateur de courant (G) et, par conséquent, de la pompe (3) raccordée à lui, servant de frein magnétique, empêchant ainsi le système pompe-générateur de courant (G) de dépasser une valeur seuil de la vitesse de rotation, et
- durant son fonctionnement, l'onduleur (5) passe automatiquement d'une configuration à l'autre sur la base des besoins réels.

7. Procédé pour la production d'électricité exploitant une hauteur de charge géodésique (H) d'eau dans un système hydraulique, comprenant les étapes consistant à :
- installer au moins une pompe (3) pouvant fonctionner comme une turbine PaT pour exploiter la hauteur de charge géodésique (H) disponible pour l'eau dans un réservoir (1), apportant l'eau jusqu'à la distribution de la pompe (3),
- coupler à la pompe (3) un générateur de courant (G) ayant un onduleur (5) avec une fréquence variable ou fixe en fonction du générateur (G) qui est en courant alternatif ou continu,
- fournir au moins un clapet de régulation (6) du débit d'eau apporté à la pompe,
- installer un capteur de niveau, conçu pour mesurer le niveau d'eau dans ledit réservoir (1),
- installer au moins un capteur (9) pour le nombre de tours du générateur ou du nombre de tours de la pompe (3), et
- fournir une unité de commande (ECU) de l'onduleur (5) et du clapet de régulation (6) raccordée au capteur de niveau et au capteur (9) pour le nombre de tours, ayant un moyen de programme comprenant une mémoire dans laquelle sont chargées les courbes de caractéristiques de la pompe (3) utilisée comme turbine PaT, **caractérisé par le fait que** l'unité de commande (ECU) est programmée pour commander l'appareil (100) et pour :
a) obtenir la production d'électricité maximale,
b) obtenir un certain débit de l'eau s'écoulant à travers la pompe,
c) ajuster la pression d'eau en aval de la pompe,
d) maintenir le niveau d'eau dans le réservoir constant au fil du temps,
au moyen de l'ajustement du clapet de régulation (6) et de la vitesse de rotation de la pompe (3) par le biais de l'onduleur (5),
par rétroaction sur la base du nombre de tours détecté par le capteur (9) pour le nombre de tours du générateur et du niveau d'eau dans le réservoir détecté par le capteur de niveau.

8. Procédé selon la revendication 7, dans lequel la production d'électricité maximale selon le point a) est obtenue :
*a1)* si le débit d'eau est sensiblement constant et connu a priori, en échantillonnant le nombre de tours avec le capteur (9) spécial, en comparant de telles valeurs échantillonnées aux courbes de caractéristiques en mémoire, et en faisant fonctionner l'onduleur (5) pour ajuster la vitesse de rotation du générateur électrique (G) et, par conséquent, la vitesse de rotation de la pompe (3), et la maintenir stable au nombre de tours correspondant à la production d'électricité maximale pour les valeurs de débit détectées,
ou en fournissant au moins un capteur de débit (8) et/ou un capteur de pression (7), et
*a2)* si le débit et/ou la pression d'eau varient au fil du temps ou dans tous les cas sont inconnus a priori en échantillonnant, au moyen de tels capteurs (7, 8), les valeurs de débit et/ou les valeurs de pression de l'eau apportée par la pompe (3), en comparant de telles valeurs échantillonnées aux courbes de caractéristiques en mémoire et en faisant fonctionner l'onduleur (5) pour ajuster la vitesse de rotation du générateur électrique (G) et, par conséquent, la vitesse de rotation de la pompe (3) raccordée à lui, et la maintenir stable au nombre de tours correspondant à la production d'électricité maximale pour les valeurs de débit et/ou de pression détectées.

9. Procédé selon la revendication 7 ou la revendication 8, comprenant le fait de fournir au moins un clapet de régulation (6) du débit d'eau, apporté par la pompe (3), également actionné par l'unité de commande (ECU) pour obtenir l'ajustement précis du nombre de tours de la pompe (3) et/ou du débit d'eau.

10. Procédé selon l'une quelconque des revendications 7 à 9, dans lequel l'unité de commande (ECU) est également programmée pour obtenir :
b) le certain débit d'eau s'écoulant à travers la pompe (3),
et un tel ajustement est obtenu en utilisant les courbes de caractéristiques en mémoire, par rétroaction :
- sur la base du nombre de tours détecté par le capteur (9) spécifique, avec un débit d'eau constant et connu a priori, ou
- sur la base de la valeur de débit mesurée par un capteur de débit (8), avec un débit d'eau variable au fil du temps ou, dans tous les cas, inconnu a priori,
au moyen d'un parmi :
*bl)* l'ajustement de l'onduleur (5) par l'unité de commande (ECU), pour amener le générateur de courant (G) et, par conséquent, la pompe (3) raccordée à lui, au nombre de tours souhaité, de telle sorte que, à travers la pompe (3) qui tourne au nombre de tours souhaité, seul le débit d'eau souhaité peut passer ;
ou
*b2)* l'appareil comprend un clapet de régulation (6) du débit d'eau en amont de la pompe (3) et nous procédons en ajustant par l'unité de commande (ECU) un tel clapet avec ou sans l'intervention de l'onduleur (5) sur la pompe (3) ; ou
b3) l'ajustement du clapet de régulation (6) et de l'onduleur (5), par l'unité de commande (ECU), c'est-à-dire en réalisant un ajustement mixte entre *bl)* et *b2).*

11. Procédé selon l'une quelconque des revendications 7 à 10, dans lequel l'unité de commande (ECU) est également programmée pour commander l'appareil (100) et également obtenir :
c) l'ajustement de la pression d'eau en aval de la pompe (3),
et cet ajustement est obtenu en utilisant les courbes de caractéristiques en mémoire, par rétroaction :
- sur la base du nombre de tours de la pompe (3) ou du générateur (G) détectés par le capteur (9) spécifique, avec un débit et/ou une pression d'eau constants et connus a priori, ou
- sur la base de la valeur de pression mesurée par un capteur de pression (7), avec un débit et/ou une pression d'eau variables au fil du temps ou, dans tous les cas, inconnus a priori,
au moyen d'un parmi :
c1) l'ajustement de l'onduleur (5) par l'unité de commande (ECU), pour amener le générateur de courant (G) et, par conséquent, la pompe (3) raccordée à lui, au nombre de tours souhaité, de telle sorte que, à travers la pompe (3) qui tourne au nombre de tours souhaité, seul le débit d'eau souhaité peut passer, correspondant à la pression souhaitée ;
ou, l'appareil (100) comprend également un capteur de pression (7) conçu pour détecter la différence de pression de l'eau en amont et en aval de la pompe (3), et au moins un clapet de régulation (6) du débit d'eau, et l'ajustement de pression d'eau en aval de la pompe (3) est obtenu en variante :
c2) en ajustant, par l'unité de commande (ECU), le clapet de régulation (6) du débit d'eau en amont de la pompe (3), de telle sorte que le débit d'eau réglé correspond à la pression souhaitée telle que mesurée par le capteur de pression (7) ;
*c3)* en ajustant à la fois le clapet de régulation (6) et l'onduleur (5), par l'unité de commande (ECU), c'est-à-dire en réalisant un ajustement mixte entre *c1)* et c2).

12. Procédé selon l'une quelconque des revendications 7 à 11, comprenant les étapes de :
d) l'unité de commande (ECU) fait fonctionner l'onduleur (5) en variante dans l'une des deux configurations suivantes :
*dl)* dans une première configuration, appelée *entraînement,* l'onduleur (5) entraîne le générateur de courant (G) en rotation et, par conséquent, la pompe (3) raccordée à lui, servant de moteur et attirant l'électricité par exemple en provenance d'un réseau externe, et
*d2)* dans une seconde configuration, appelée *régénérative,* l'onduleur (5) freine le générateur de courant (G) et, par conséquent, la pompe (3) raccordée à lui, servant de frein magnétique, empêchant ainsi le système pompe-générateur de courant de dépasser une valeur seuil de la vitesse de rotation, et
dans lequel durant son fonctionnement, l'onduleur (5) passe automatiquement d'une configuration à l'autre sur la base des besoins réels.

13. Utilisation de l'appareil (100) selon l'une quelconque des revendications 1 à 6 pour produire de l'électricité en exploitant la hauteur de charge géodésique (H) d'eau dans des aqueducs, des égouts des systèmes d'irrigation.
